# EUROPEAN PATENT SPECIFICATION

(11) **EP 2 989 601 B1**
(45) Date of publication and mention of the grant of the patent: **08.01.2020**
(21) Application number: 14732583.1
(22) Date of filing: 25.04.2014
(51) Int. Cl.: G06Q 20/36

(54) **SECURE VOICE TRANSACTIONS**
SICHERE SPRACHTRANSAKTIONEN
TRANSACTIONS VOCALES SÉCURISÉES

(30) Priority: 25.04.2013 GB 201307513
(43) Date of publication of application: 02.03.2016
(73) Proprietor: Semafone Limited, Guildford, Surrey GU1 4HN (GB)
(72) Inventor: CRITCHLEY, Timothy, Redhill Surrey RH1 6BH (GB); JACKSON, David, East Molesey Surrey KT8 9BL (GB); COZENS, Jim, Slough Berkshire SL3 9BP (GB)
(74) Representative: Mathys & Squire
(86) International application number: PCT/GB2014/051311
(87) International publication number: WO 2014/174322

(56) References cited:
- WO-A1-2006/022513
- US-A1- 2011 228 919
- US-A1- 2011 317 828
- US-B1- 8 275 115

## Description

The present invention relates to apparatus for and methods of facilitating secure transactions, such as payments for goods and/or services, especially when made during a voice call, such as via telephone. Aspects of the invention may find particular application to the secure transmission of sensitive information, such as payment card details from an electronic wallet, as may be implemented on a mobile device such as a smartphone, over a telephony connection to a remote system, such as a voice payments system - although certain of these aspects may be more generally applicable to the secure transmission of sensitive data during voice communication.

As electronic payment methods continue to displace the use of cash, one environment which has seen relatively little recent development has been that of "voice payments", as in payment transactions made during telephone calls.

Many organisations, such as merchants and service providers, provide a telephone payments system to allow their customers to pay for goods and services during a telephone call with an agent of the organisation; some organisations operate call centres staffed by agents for this purpose.

Typically, the customer is required to relay certain sensitive information, such as an account number and/or details of payment cards such as credit and debit cards, to the agent in order to complete the payment transaction.

In a basic telephone payments system, the customer (or caller) simply recites or reads out the sensitive information (such as credit card number, expiry date etc) and the agent records this information or inputs it directly into a payments processing system. Such a system is clearly not especially secure, as the agent has full access to the sensitive information and could potentially make fraudulent use of it.

More advanced voice payments systems may have the customer input the numeric parts of the sensitive information with their telephone handset by means of touch-tones (typically, Dual-Tone Multi-Frequency or DTMF tones) - although such a system is also insecure as the tones could be recorded by an unscrupulous agent, unless the tones are masked from the agent or preferably blocked from the agent entirely. One solution is provided by UK granted patent GB2473376, in the name of the applicant.

US 2011228919 A1 relates to signal detection and blocking for voice processing equipment in connection with electronic wallets. WO2006/022513 A1 uses an electronic wallet for carrying transaction relevant data. Pursuant to the present invention it is appreciated that many people are now in possession of devices such as mobile telephones - and in many cases sophisticated smartphones with significant computing power and connectivity - and that this affords the prospect of further development of the voice payment process.

In particular, many of these devices are capable of running applications which can act as (or have access to) so-called "electronic wallets" or (or "eWallets") which enable the device user to store securely sensitive information.

However, presently, many eWallet strategies focus on internet and "cardholder present" transactions and lack support for voice payments.

For example, some current systems suffer from usability issues when they require the device owner to supply their card details to pay for goods/services during a telephone conversation. The device owner must switch to the eWallet application and read out the card holder data to the agent, moving the phone handset to and from their ear to read and announce segments of the PAN/Security Code to the operator - which is also a potential security risk as previously described.

There is also a desire within the payments industry to offer a more integrated and secure solution. In particular, it is desirable in respect of the latter to find a way to offer sufficient handset/cardholder security by way of verification and authentication so as to promote eWallet voice transactions to (quasi) "cardholder present" transactions. This would serve to reduce call centre transaction costs as "card holder not present" transactions are considered more susceptible to fraud than "cardholder present" transactions and consequently payment card providers charge higher fees to merchants for their processing.

The present invention seeks to make use of the capabilities of devices such as smartphones to facilitate secure transactions and thereby provide an enhanced telephone or, more broadly, voice payments system. Aspects of the invention may also be applicable to more basic devices.

According to one aspect of the invention, there is provided a method of facilitating a transaction during a voice call between a caller or callee and an agent, for example for a merchant or organisation, via a call processor, the method comprising: activating a secure mode of the call processor adapted to prevent sensitive information relating to the transaction provided by the caller from reaching or being accessible by the agent; transmitting a notification that the secure mode has been activated via a voice channel used for the voice call to an electronic wallet accessible by the caller in which the sensitive information is stored, the electronic wallet being adapted not to transmit sensitive information unless the secure mode is determined to be active; receiving from the electronic wallet an acknowledgement of receipt of the notification and subsequently sensitive information; and processing the transaction in dependence on or using the sensitive information received from the electronic wallet. Transmitting the notification may ensure that sensitive information is not divulged by the electronic wallet until the secure mode is activated. Transmitting the notification via the voice call thus may provide a common way for initiating transactions for a plurality of different electronic wallets and different ways in which the subsequent transaction may proceed.

Preferably, the method further comprises activating the secure mode in response to receiving a secure mode activation signal from the caller. This may reassure the caller by providing them with direct control of an aspect of the transaction.

Preferably, the method further comprises activating the secure mode in response to receiving a secure mode activation signal from the electronic wallet and/or the agent.

The notification may comprise a plurality of tones.

Preferably, the method further comprises requesting the sensitive information via a plurality of tones via the voice call.

Preferably, the method further comprises receiving the sensitive information as a plurality of tones via the voice call.

The tones may be inaudible. The tones may comprise DTMF tones. The tones may be masked by or incorporated into an audio signal. This may act as an audible status update or a system identifier, compatibility indicator or as branding.

The sensitive information may be encoded in base 14 or base 12.

Preferably, the sensitive information is received via an alternative communication channel other than that being used for the voice call.

Preferably, the method further comprises maintaining the voice call between the caller and the agent during the transaction.

Preferably, the method further comprises monitoring for the presence of: a) a voice call and transmitting a trigger to the electronic wallet to prepare for potential use; and/or b) other transaction methods and determining which transaction method is to be used, preferably in dependence on at least one of: i) an order of precedence of transaction methods; and ii) prioritising the transaction method already in progress.

Preferably, the method further comprises determining the compatibility of the electronic wallet with the method described above.

Preferably, determining the compatibility of the electronic wallet comprises at least one of: i) transmitting to the electronic wallet a signal comprising an identifier identifying the transaction method or system or a query requesting identification of at least one transaction method or system with which the electronic wallet is compatible; and ii) receiving from the electronic wallet a signal comprising an indicator indicating the compatibility of the electronic wallet with the transaction method or system or an identifier of at least one transaction method or system with which the electronic wallet is compatible.

According to another aspect of the invention, there is provided a call processor for facilitating a transaction during a voice call between a caller and an agent, comprising: means for activating a secure mode of the call processor adapted to prevent sensitive information relating to a transaction provided by the caller from being accessible by or reaching the agent; means for transmitting a notification that the secure mode has been activated via a voice channel used for the voice call to an electronic wallet accessible by the caller in which the sensitive information is stored, the electronic wallet being adapted not to transmit sensitive information unless the secure mode is determined to be active; means for receiving an acknowledgement of receipt of said notification and subsequently sensitive information from the electronic wallet; and means for processing the transaction in dependence on the sensitive information received from the electronic wallet.

Preferably, the means for activating the secure mode is adapted to activate the secure mode in response to receiving a secure mode activation signal from at least one of i) the caller; ii) the electronic wallet; and/or iii) the agent.

Preferably, the notification comprises a plurality of tones and/or the call processor further comprises means for: a) requesting the sensitive information via a plurality of tones via the voice call and/or b) receiving the sensitive information as a plurality of tones via the voice call.

Preferably, the means for receiving the sensitive information is adapted to receive the sensitive information via an alternative communication channel other than that being used for the voice call.

Preferably, the call processor is adapted to maintain the voice call between the caller and the agent during the transaction.

Preferably, the call processor further comprises means for determining the compatibility of the electronic wallet with the call processor.

Preferably, the means for determining the compatibility of the electronic wallet with the call processor is adapted to do at least one of: i) transmit to the electronic wallet a signal comprising an identifier identifying the call processor or a query requesting identification of at least one call processor with which the electronic wallet is compatible; and ii) receive from the electronic wallet a signal comprising an indicator indicating the compatibility of the electronic wallet with the call processor or an identifier of at least one call processor with which the electronic wallet is compatible.

According to another aspect of the invention there is provided a computer program product for providing an electronic wallet adapted to facilitate a transaction during a voice call between a caller and an agent, comprising: means for storing sensitive information relating to the transaction; means for receiving a request for the sensitive information; means for receiving a notification via a voice channel used for the voice call that a secure mode has been activated, the secure mode being adapted to prevent the sensitive information from reaching the agent; and means for transmitting an acknowledgement of receipt of the notification and subsequently the sensitive information; wherein the means for transmitting is adapted to transmit the sensitive information only if the notification that a secure mode has been activated has been received; and wherein the electronic wallet is adapted not to transmit sensitive information unless the secure mode is determined to be active.

Preferably, the electronic wallet is adapted to transmit a secure mode activation signal in dependence on the caller accessing the electronic wallet.

Further features of the invention are characterised by the dependent claims.

The invention extends to methods and/or apparatus substantially as herein described with reference to the accompanying drawings.

The following terms may be interchangeable:
- customer, consumer, client, caller, user, callee
- agent, operator
- mobile / user (telephony) device or phone, handset
- merchant, service provider, call centre - and associated agent
- voice, audio, media channel or path - and corresponding call
- data, signalling channel or path
- electronic wallet, e-wallet, eWallet
- sensitive information, data

For ease of reference, some terms of the art used in this document are gathered here:
- Payment Card: Credit card or debit card
- PAN: Primary Account Number (long identification number typically found on the front of a payment card)
- PIN: Personal Identification Number
- PCI: Payment Card Industry
- PCI DSS: PCI Data Security Standard
- PED: PIN Entry Device
- PSP: Payment Service Provider
- Card Security / Verification Code or value (CSC / CVC / CVV): Typically the three digits found on the back of the payment card, used to confirm the authenticity of the card and/or PAN
- DTMF Tone: Dual-Tone Multi-Frequency audio beeps as typically produced via use of a mobile phone keypad
- MTMF Tone(s): audio signals generated from "Multi Tone Multi Frequencies", which includes as a sub set (but are not restricted to) DTMF tones. MTMF tones may be audible or inaudible.
- IMSI: International Mobile Subscriber Identity, unique identifier typically stored in a SIM card of a mobile phone
- IMEI: International Mobile Equipment Identity, unique identifier typically hard-coded into the memory of a mobile phone
- CLI: Caller Line Identification
- DDI: Direct Dial-ln3D Secure: a protocol used for additional security in online payment card transactions

The invention may provide one or more of the following:
- Enabling the secure transmission of card details from an eWallet over a telephony connection to a remote payment system (connected to the far end of the call)
- Payment card details are sent by the device to the payment system when activated by the handset user, for example, forwarded from the eWallet upon user approval
- The direct connection of the two telephony end points implies the authenticity of the customer, and therefore their payment details which are received via it
- The device is made aware that a compatible payment service is on the far end of the call
- The telephone call may be initiated by either the agent or the customer
- Data is exchanged over the telephone connection between the handset and the payment system deployed either "in the cloud" or "on premise".
- Data is delivered over the telephony end points without impedance or interference
- Data is encoded as either audio signals or data within (or in parallel with) the call
- Where data is transmitted as tones, these may be either:
   o audible tones such as DTMF, or any audio signal that is detectable at either end of the call, henceforth referred to as MTMF; or
   o inaudible
- Data may be encrypted
- Payment card details are securely delivered from the handset to the agent's payment system via a call processor, such that the resulting voice payment transactions may be considered as "card holder present" transactions
- In principle, the handset may be turned into a class of PED with the combined use of an "eWallet", handset software, and the voice payments system herein described.
- In some embodiments the potential to add "one time transaction codes" and 3D security feature also exists.
- The caller may not necessarily be a pre-registered user of the payment system.
- The caller may not necessarily be the initiator of the call, hence the term may be interchanged with "callee" as appropriate
- User authorisation may be by PIN entry or for example by password, voice recognition, fingerprint recognition, facial recognition or by any other suitable means.

The invention also provides a computer program and a computer program product for carrying out any of the methods described herein and/or for embodying any of the apparatus features described herein, and a computer readable medium having stored thereon a program for carrying out any of the methods described herein and/or for embodying any of the apparatus features described herein.

The invention also provides a signal embodying a computer program for carrying out any of the methods described herein and/or for embodying any of the apparatus features described herein, a method of transmitting such a signal, and a computer product having an operating system which supports a computer program for carrying out any of the methods described herein and/or for embodying any of the apparatus features described herein.

Any apparatus feature as described herein may also be provided as a method feature, and vice versa. As used herein, means plus function features may be expressed alternatively in terms of their corresponding structure, such as a suitably programmed processor and associated memory.

Any feature in one aspect of the invention may be applied to other aspects of the invention, in any appropriate combination. In particular, method aspects may be applied to apparatus aspects, and vice versa. Furthermore, any, some and/or all features in one aspect can be applied to any, some and/or all features in any other aspect, in any appropriate combination.

It should also be appreciated that particular combinations of the various features described and defined in any aspects of the invention can be implemented and/or supplied and/or used independently.

Furthermore, features implemented in hardware may generally be implemented in software, and vice versa. Any reference to software and hardware features herein should be construed accordingly.

These and other aspects of the present invention will become apparent from the following exemplary embodiments that are described with reference to the following figures in which:
Figure 1 shows an overview of a voice payments system;
Figure 2 shows a user mobile telephony device with an electronic wallet;
Figure 3 shows the eWallet transaction application 90 (or eWallet component);
Figure 4 shows the call processor in further detail; and
Figure 5 shows an example voice payments system operation sequence.

### Overview

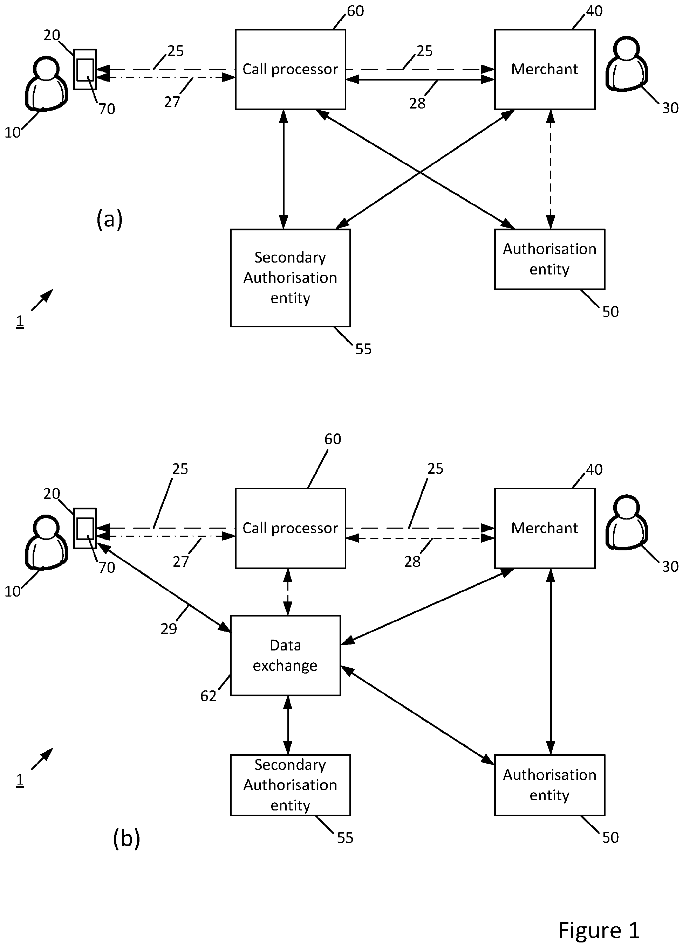

Figure 1 shows an overview of a voice payments system 1, in which a user 10, in possession of a mobile telephony device 20, is engaged in a voice call 25 with an agent 30 of a merchant or service provider 40. Device 20 also incorporates (or has access to) an electronic wallet 70 which stores sensitive information relating to payment cards of the user 10.

The completion of a payment transaction (wherein the user 10 purchases a good or service from the merchant or service provider 40) requires the transaction to be authorised by an authorisation entity (such as a bank) 50.

Optionally, the transaction may be further authorised (and/or user 10 may be further authenticated) by a secondary authorisation entity (such as a payment card issuing authority) 55; hence, authorisation entity 50 may be considered to be a "primary" authorisation entity. These authorisation / authentication processes require the provision (subject to permission of the user 10) of sensitive information by the electronic wallet 70 to the appropriate entity 50, 55 preferably without the sensitive information becoming available to the agent 30.

A call processor 60 is therefore provided through which the voice call 25 passes, the call processor 60 being adapted to mediate the exchange of sensitive information between the user 10 and the agent 30, relaying the appropriate sensitive information elements to entity 50,55 as required.

During a telephone call to a call centre an example of the eWallet user experience is broadly as follows:
1. The agent (with access to a "merchant session" in the payment transaction system, typically a graphical user interface showing the progress of the call) asks the caller 10 for payment details which are stored on the eWallet 70
2. The caller 10 opens the eWallet 70 by entering the correct PIN
3. The agent 30 is alerted to the fact that this is an "enabled" ewallet 70 (for example by a suitable indicator being shown on the agent's display for monitoring progress of the transaction) and therefore simply asks the user 10 to select the payment card they wish to use.
4. When the user 10 clicks on this card the eWallet 70 securely sends the card details to the call processor 60 where they are held ready for payment processing.
5. On receipt of this data the agent 30 is updated regarding the captured card data (for example, by being presented masked data - in a PCI compliant way - on a suitable display) and its validation state. The secure data capture process is complete and processing continues as normal.

Typically, the caller 10 and agent 30 remain in voice communication throughout (via the voice channel 25), with signalling tones 27 being exchanged between the user device 20 and the call processor 60; the agent 30 may exchange data with the call processor 60 via a data channel 28.

The secure exchange of information - in particular the sending in step 4 of card details from the eWallet to the call processor - may be accomplished in various ways according to the capabilities of the device 20 and the available communications channels at the time the payment transaction is attempted.

Figure 1 (a), for example, shows the device 20 using signalling tones 27 (described below) in the voice channel to communicate with call processor 60.

Figure 1 (b), shows a variant wherein the device 20 makes use of a data channel 29 to communicate the sensitive information to call processor 60 via a data exchange server 62.

Optionally the eWallet and the call centre payment process may also:
- generate and send a "one time transaction code", which is supplied as part of the card holder data
- support 3D Secure - wherein the agent's payment process is directed to a 3D Secure process (for example at an entity 55) which delivers an authentication challenge to the customer 10 to further identify themselves as the card holder before the payment transaction can be authorised.

The following aspects of the voice payments system 1 are now described in more detail:
- communication channels
- signalling tones
- user device 20
- electronic wallet 70
- call processor 60

### - communication channels

Secure data (card holder data) is transmitted from the eWallet to the agent's session, as well as other related state information such as Secure Mode and eWallet capability. This information may be delivered either by a telephony (voice) channel or, where available, a data channel.

Where both telephony / voice and data channels are used, an identifier or reference is used for the transmissions in each channel in order to allow the information from each channel to be related appropriately. The identifier may, for example, be sent as a separate part of each transmission or encoded within the transmissions.

### - telephony (voice) channel

Data may be delivered via DTMF (or some other audio encoding mechanism, directly from the eWallet application to and from the call processior (and thus DPM Session) in a private point to point communication strategy (private, but not naturally secure by default). There is no need to establish any additional reference identifying the device to the call processor 60.

For VoIP-based protocols, such as SIP, the eWallet may be adapted to take advantage any available telephony data channel between it and the call processor 60.

### - data channel

In some embodiments, the transmission of sensitive information may be via a separate data channel, dependent on service availability at the time of the call.

To exchange data between the device 20 and the call processor 60 a unique reference is shared between:
- The eWallet application session
- Call processor 60 Secure Data Session (DPM Session) - this is where the card holder data is securely stored

The unique reference is either:
- supplied by the device 20 and sent via the telephony channel to the call processor 60, or is
- generated by the call processor 60 and sent to the device 20, again by the telephony channel

In some embodiments, the eWallet and call processor 60 then also use this reference to exchange data via an intermediary secure service hosted in the Internet, called a Data Exchange Service (DES).

When the device owner selects the card the eWallet securely transmits the card holder data to the DES, call processor 60 detects the receipt of this data for the given call and retrieves and stores the data in its secure data buffers - in the same way as for DTMF transmission.

Strong encryption, and decryption, may be applied to all outbound/inbound data flows.

Hence, in some embodiments, such as those with simple "2G" devices effectively having only a voice channel and no separate (internet capable) data channel, the payment system uses only the voice channel.

By contrast, a "3G" device 20 may use separate channels for voice and data communication and potentially use both with the payment system.

In other embodiments, the distinction between voice and data is less immediately apparent, for example in a "4G" device where voice and data may be being transmitted as packets over an IP network. Nevertheless, where voice and data are sent separately as distinct packets, references to separate voice (or telephony) and data channels may be understood as referring to voice and data being effectively communicated separately.

In respect of embodiments using Session Initiation Protocol (SIP) telephone calls, these essentially have two main elements over which the conversation is conveyed:
- Audio stream (or media path) - this is the digitised voice sent from one call end point to the other (unidirectional)
- Signalling stream (or signalling path) - this contains events and control information about the call from one end point to the other

For each SIP-enabled telephone call two pairs of these paths exist, one for each end point, delivering data from one end to the other. i.e. voice signals and information about the call are carried in an audio/signalling stream pair to the other end of the call, and likewise receive and connect to another pair of streams from the far end, so that a caller can hear what the other party is saying.

Nevertheless, even when a separate data channel is available, embodiments may opt to use only the voice channel for the payment process.

### - signalling tones

Voice payments system 1 uses signalling tones to convey data in the voice channel. These may be standard DTMF tones or in some embodiments Multi-Tone Multi-Frequency (MTMF) tones.

Standard DTMF uses low/high sinusoidal tone pairs - typically a "low" tone = {697, 770, 852 and 941 Hz} is paired with a "high" tone = {1209, 1336, 1477 and optionally 1633 Hz} - to represent the numerals 0-9, control codes '*' and '#' and optionally preassigned functions A-D.

The MTMF encoding described herein may not necessarily conform to the DTMF standards.

The encoding may for example encode to base 16 data for DTMF transmission, potentially as base 14 if not using the "*" and "#" DTMF tones. Other encoding schemes may also be used, for example with additional tones and/or in alternative combinations, for example as non-DTMF pairings or as triplets of tones.

MTMF therefore enables the transmission of any alphanumeric character or string of characters describing the transaction to be transmitted as a tone or series of tones.

The tone transmission may include any alphanumeric data as required by the call centre such as a one-time transaction code, payment card details, national insurance number, driving license data, passport detail etc.

Additionally the call centre may send alphanumeric data to the handset 20 such as merchant data, transaction value, a purchase receipt and non-financial data that the caller 10 may require as part of the phone interaction.

In some embodiments, these tones are inaudible and/or very short in duration, thus allowing the transmission of 16 digits in 1-2 seconds, for example, or less, in order to least inconvenience the user. For a similar reason, compression is used where possible to reduce the amount of DTMF / MTMF being transmitted.

### - user device

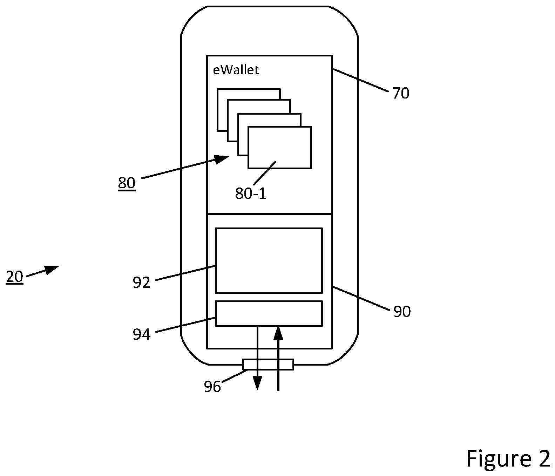

Figure 2 shows a user mobile telephony device 20 with an electronic wallet 70.

Device or handset 20 is a mobile telephone or cellphone, preferably a so-called smartphone, comprising a microprocessor running a suitable operating system such as Android, iOS or Windows Mobile, and with the ability to communicate both voice and data. Alternatively, device 20 may be a tablet computer or a dedicated standalone eWallet device.

Handset 20 is also adapted to transmit and receive signalling tones, such as DTMF tones in the voice channel. This may be enabled, for example, directly in the device software, for example by means of:
- Send DTMF method exposed at the application developer layer
- Availability of DTMF listener functionality, which will execute third party application functionality

Optionally, device 20 may also be adapted to process audio tones other than DTMF for data transmission, for example audio watermarking as developed by Intrasonics Ltd. (www.intrasonics.com).

As will be described below, in some embodiments the device 20 is adapted to use such signalling tones in order to transmit and receive sensitive information via the voice path during a (voice) telephone call.

Device 20 may also be adapted to use a data channel in addition to the voice channel.

### - electronic wallet

Device 20 is equipped with an electronic wallet (or eWallet) 70, which is typically provided as a software application installed on the device 20, and is adapted to store sensitive data, such as payment card information. Typically, information for a plurality of payment cards 80 is stored in eWallet 70, with an individual payment card 80-1 being selectable by the user 10, for example via the device keypad, touchscreen or increasingly voice. Typically, the user is required to provide some means of authorisation and/or authentication in order to use the eWallet, for example a PIN, a password of phrase or a biometric such as a voice, face or fingerprint.

The ewallet application may comprise a third party off-the-shelf secure "payment card" storage application. Examples of suitable eWallet applications (for the Android operating system) include: Pocket, SPB Wallet, Sprint Mobile Wallet, Moxier Wallet Password Manager, UniQPass Password Wallet, Google Wallet and Iliumsoft ewallet. The eWallet may be provided by a payment (card) authority such as VISA, Mastercard or Amex, a payment entity such as PayPal, a telecoms provider or a bank.

The eWallet 70 is adapted to be compatible with voice payments system 1 by the incorporation of suitable code or eWallet component 90. The eWallet component may be supplied as a library to eWallet vendors for inclusion in their product. Alternatively, a separate eWallet transaction application 90 is installed on the device 20 and effectively integrated into the eWallet application 70.

The eWallet component 90 comprises a plurality of software modules 92 for processing aspects of the payment transaction and a communications module 94 to facilitate communication of payment transaction information via a device input/output port 96 (once it is determined safe to do so).

The functionality of device 20 is extended to support the detection and transmission of DTMF/MTMF tones. This may require the eWallet application to have access to the voice path of the call and be able to inject media (tones) into it which will reach the far end of the call. This may require device manufacturers to provide suitable application program interfaces APIs in order to support the sending and receiving of DTMF/MTMF tones.

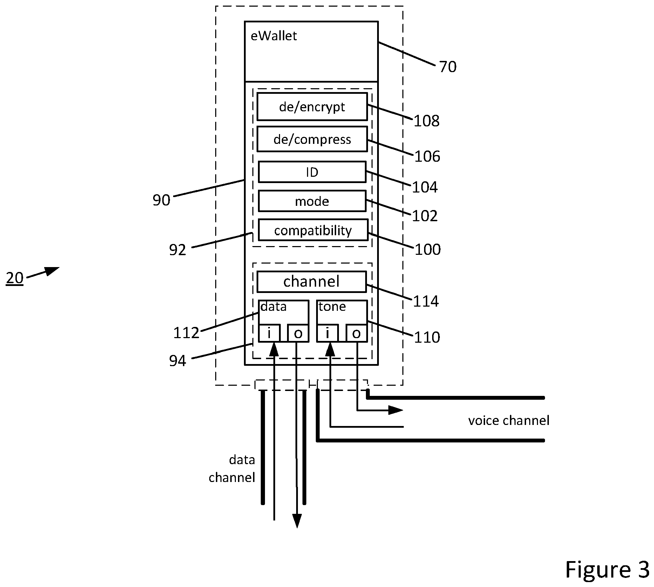

Figure 3 shows the eWallet transaction application 90 (or eWallet component).

This comprises a plurality of software modules providing the resulting ewallet 70 with one or more of the following associated capabilities, depending on the embodiment:
Processing module 92 comprises:
- Compatibility module 100 - capable of indicating eWallet compatibility with the call processor 60 and payment system 1; typically, the compatibility module 100 is constantly listening for an activation signal indicating that a payment transaction is imminent
- Mode module 102 - capable of determining the state of the transaction and changing mode accordingly, for example by being sensitive to eWallet "pay" functionality based on device operation and state.
- ID module 104 - capable of determining one or more device and/or user identifiers, such as an eWallet identifier, the handset device ID, IMSI, IMEI, CLI, DDI, and of generating a unique reference number that is difficult to imitate (or manipulate); in some embodiments ID module 104 is also capable of generating and delivering a "one-time transaction code", for example which is specific to the particular use of the device at the time (for example, an IP number or timestamp), preferably to the specific transaction. This code may for example be determined from a combination of the device and/or user identifiers, for example as a hash code.
- De/compress module 106 - capable of compressing and/or decompressing data
- De/encrypt module 108 - capable of encrypting and decrypting data, potentially using a local certificate store.

Communications module 94 comprises:
- Tone module 110 - capable of delivering and receiving data as tones (for example as DTMF) to the call processor 60 over the telephony channel and to listen for DTMF events on the call and invoke eWallet specific functionality

Optionally:
- Data module 112 - capable of delivering data to the call processor 60 via the data channel
- Channel module 114 - capable of determining the preferred way (eg. over voice or data) for the sensitive information to be transmitted between the device 20 and call processor 60, for example, dependent on the availability or otherwise of a suitable data channel

### - call processor

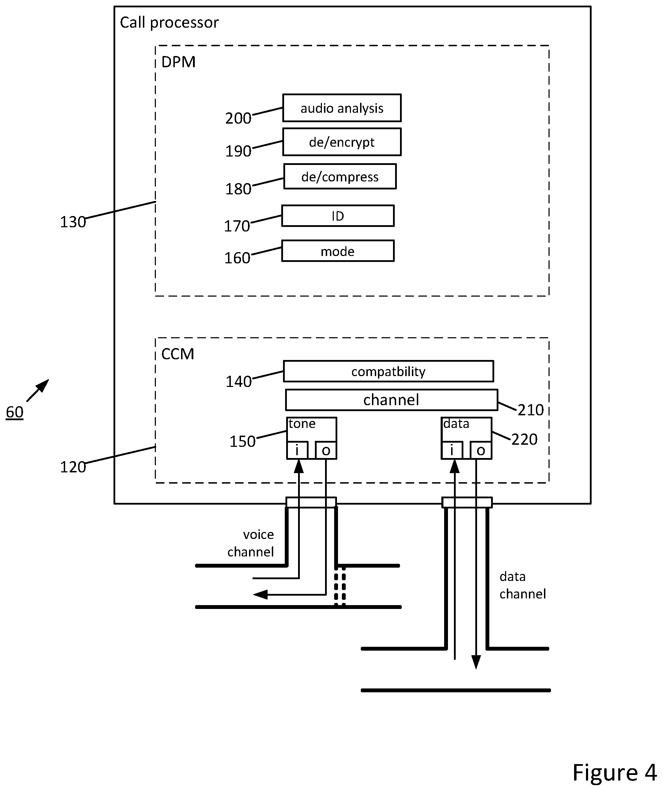

Figure 4 shows the call processor 60 in further detail, shown optionally as two main components: the Call Control Module (CCM) 120 and the Data Processing Module (DPM) 130 - although in some embodiments, there is no logical and/or physical separation between CCM and DPM.

Call Control Module 120 comprises one or more of the following modules, depending on the embodiment:
- Compatibility module 140 - capable of detecting compatible data from the eWallet over the call voice path and can pass that to the DPM for processing
- Tone module 150 - adapted to inject DTMF and other media into the voice path in order to deliver data to the handset application (over call voice path) where it is detected and passed to the eWallet.

Data Processing Module 130 has one or more of the following modules, depending on the embodiment:
- Mode module 160 - capable of propagating the Secure Mode state to the eWallet session and receiving notification from the device that the eWallet application is enabled. This information is sent to the Payment UI to alert the agent.
- ID module 170 - capable of receiving and storing an optional "one time transaction code", broadly similar to ID module 104 located in the device 20; the identifier and one-time codes are in some embodiments provided by the call processor rather than the device
- De/encrypt module 180 - capable of applying strong encryption, and decryption, to all outbound/inbound data flows, potentially using a local certificate store
- De/compress module 190 - capable of compressing and/or decompressing data
- Audio analysis module 200 - processor capable of detecting and processing signalling tones

Optionally:
- Channel module 210 - capable of determining the preferred way (eg. over voice or data) for the sensitive information to be transmitted between the device 20 and call processor 60
- Data module 220 - adapted to send data to and receive data from the device 20 and/or a Data Exchange Service (DES), potentially also the ability to process alpha characters as secure data (3D Secure support), where, for example, this data may be sourced from the DES

In some embodiments, call processor 60 is integrated with a call processor and/or payment gateway as described in UK granted patent GB2473376.

For call processor 60 to generate and/or detect MTMF tones it intercepts and sequences the audio paths of the call. In doing so the call processor 60 may become a point of failure with regard to the telephony service. To reduce this risk, in some embodiments the call processor 60 only processes, or modifies, these audio paths when in SecureMode.

### - agent interface

Agent 30 interacts with the caller by voice and by means of a "merchant session" interface provided by the payment transaction system, typically a graphical user interface. From this the agent 30 is able to:
- query and/or determine whether the user eWallet is compatible (and to what extent) with the payment system, as indicated for example by a suitable indicator on the interface
- (in some embodiments) initiate SecureMode
- monitor progress of the call
- effect other aspects of the transaction, such as set up the transaction initially and effect the correction of errors

Typically, SecureMode is initiated by the transmission of signal tones in the voice channel. The SecureMode initiation signal tones may be encoded as part of a distinctive tone sequence to additionally provide the caller with an audible indication that SecureMode has been activated.

### Operation

The following assumes that a telephone voice call is already in progress between user 10 and agent 30, and upon the user 10 indicating verbally that a transaction is to be undertaken.

Two variants are described below, one which exclusively uses a single (here, voice) channel, the other which uses two (here, voice and data) channels.

### I - Single-channel transaction

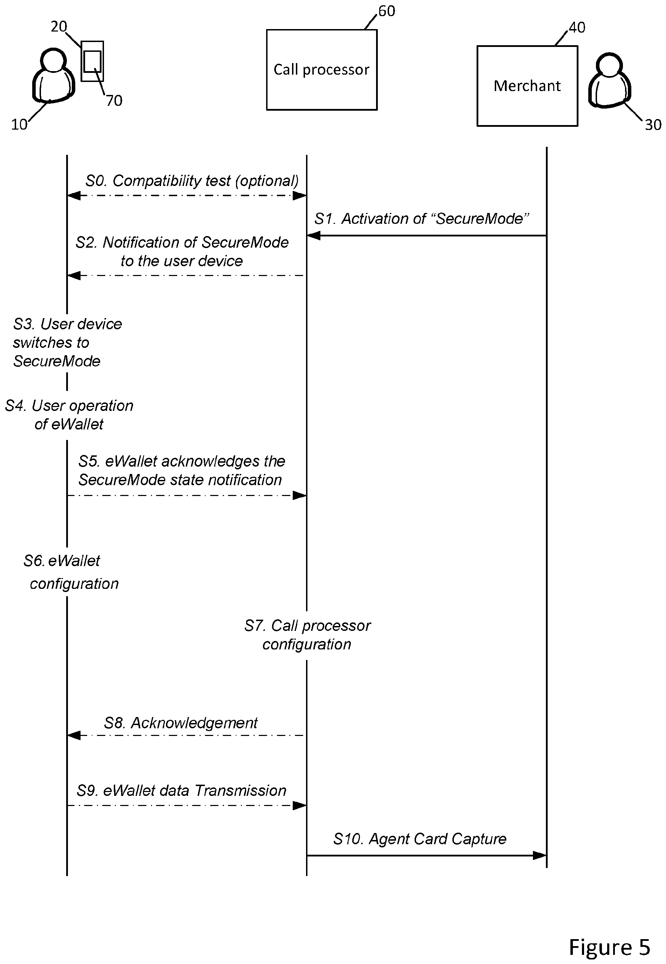

Figure 5 shows an example voice payments system operation sequence.

The process proceeds via the following steps S:

### S0. Compatibility test (optional)

Device 20 and eWallet 70 are queried by means of a preliminary voice payment system compatibility test. The agent receives a resulting indication.

### S1. Activation of "SecureMode"

Agent 30 indicates the call is to proceed in "SecureMode" by activating the appropriate call state.

### S2. Notification of SecureMode to the user device

Call processor 60 sends the SecureMode state to the handset 20.

This state is sent repeatedly x many times with a gap of y milliseconds between each delivery, or until acknowledged by the handset 20, or the call moves out of SecureMode (for example, due to call termination)
Receipt of the SecureMode activation notification may act as a "wake up" to the eWallet on the device; only the correct notification will wake up the corresponding eWallet.

### S3. User device switches to SecureMode

The eWallet 70 is adapted not to transmit sensitive details unless it detects SecureMode is activate.

### S4. User operation of eWallet

The Customer opens their eWallet application 70 and selects a payment card 80-1. The user inputting of the PIN is screened from the agent 30.

### S5. eWallet acknowledges the SecureMode state notification

The acknowledgement signal will not necessarily require audio path analysis by call processor 60 (ie. if it is a sequence of DTMF tones) because at this stage call processor 60 may only be detecting DTMF as it is monitoring the signalling path only - and not the media path. This may reduce processing overhead at the call processor, obviating the need to fully monitor all calls all the time in the event a payment transaction is in progress.

If eWallet 70 is not compatible with voice payments system 1, no acknowledgement is sent.

### S6. eWallet configuration

eWallet configures itself to transmit payment details via the telephony channel.

### S7. Call processor configuration

On receiving confirmation from the eWallet that it is "voice payments system enabled", call processor 60, where necessary, moves the call into "media mode" and the "customer-agent" media path into an audio analysis processor which will detect and process MTMF.

If no acknowledgement or confirmation is received, e-wallet 70 is presumed not to be compatible with voice payments system 1, generating an error message; the transaction does not proceed.

### S8. Acknowledgement

Once the media is "inline" an acknowledgement is sent back to the eWallet application confirming that call processor 60 is now ready to receive the payment data. The media path will continue through call processor 60 whilst in SecureMode.

### S9. eWallet data Transmission

The eWallet receives the confirmation (readiness to receive the payment data) and the Customer can now click on the eWallet "Pay" button causing the application to send the sensitive information, eg. PAN, Security, Expiry Date, and optionally Card Holder Name, Start Date and Issue Number to call processor 60 as MTMF.

### S10. Agent Card Capture.

Agent 30 may reset and ask for re-transmission an unlimited number of times. Once the data has been received and captured by call processor 60, agent 30 may take the call out of SecureMode (by default, this occurs automatically), thus causing call processor 60 to release the audio path for the call.

Optionally, call processor 60 may also request additional authentication / authorisation, for example by requesting transaction 3DS data whilst in SecureMode. The request for data required by the PSP 3DS process is sent to the eWallet application, where the customer is challenged by the 3DS user interface to provide the requested data. The ability to support 3DS may require the ability to support a full character set via MTMF. In some embodiments, the payment processor may assist in some of the 3DS authentication steps.

### II - Two-channel transaction

In this embodiment, a data channel is also available at the time the transaction is initiated.

The process is essentially as for the single-channel embodiment with one or more of the following possible changes:
- at step S7 - there is no need for the call processor to detect and process MTMF tones (although in some embodiments it may nevertheless be configured to do so)
- at step S9 - sensitive information is sent from device 20 via a second, alternative channel (such as a data channel) rather than as MTMF tones.

The device 20 (or user 10) may elect - or be required to do so by the call processor 60 - to transmit the sensitive information via the data channel (optionally, to select via which of several data channels) rather than via signalling tones in the voice/ audio channel.

The unique identifier (and optionally the one-time identifier) may be used to associate the sensitive information received with the voice call and thus the intended payment transaction.

### Alternatives and Modifications

Alternative embodiments may also have one or more of the following features:
- SecureMode triggered by the caller 10, either directly or by, say, opening the eWallet 70, or by the payment processor 60.
- eWallet 70 is adapted to be aware of when a telephone call - particularly, one that will involve a payment transaction - is in progress and able to prepare for potential use. A suitable trigger alerting the eWallet may be sent, for example, by the call processor when it becomes aware of merchant activity during a call.
- In some embodiments, whenever eWallet 70 is opened a check is made for a voice call being in progress, the assumption being that a payment transaction is due to be made via the call. Confirmation may be in the form of a signal from the call processor. The eWallet may prompt for this confirmation.
- eWallet 70 is adapted to detect the presence and potential use of other payment systems, such those using near-field-communication (NFC), and to determine which payment transaction is to have precedence, for example, according to a default order of precedence or by prioritising the payment transaction already in progress. A prompt for the user may be provided to allow precedence to be determined manually. Optionally, in cases of conflict between payment processes, eWallet 70 may signal to call processor 60 that either it or another payment transaction process has precedence and/or that a payment transaction via the call processor is not required
- Sensitive information may not be sent directly from the device 20 to the call processor 60 but instead via one or more servers in a 'cloud' arrangement, such as via a DES as previously described, the unique transaction identifier may be used to allow the call processor 60 to effectively poll the cloud server / DES for the relevant information relating to the particular transaction.
- Alternative means for triggering SecureMode and/or relaying information may also be used, for example SMS - although for cases where delivery is not always reliable within a suitable time period for a transaction an alternative channel may need to be used in addition, say after a certain time period had elapsed without success.

It will be understood that the present invention has been described above purely by way of example, and modifications of detail can be made within the scope of the invention.

Each feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A method of facilitating a transaction during a voice call between a caller (10) and an agent (30) via a call processor (60), the method comprising:
activating (S1) a secure mode of the call processor (60) adapted to prevent sensitive information relating to the transaction provided by the caller (10) from being accessible by the agent (30);
transmitting (S2) a notification that the secure mode has been activated via a voice channel used for the voice call to an electronic wallet (70) accessible by the caller (10) in which the sensitive information is stored, the electronic wallet (70) being adapted not to transmit sensitive information unless the secure mode is determined to be active;
receiving (S9) from the electronic wallet (70) an acknowledgement of receipt of the notification and subsequently sensitive information; and
processing the transaction in dependence on the sensitive information received from the electronic wallet (70).

2. The method of claim 1, further comprising activating the secure mode in response to receiving a secure mode activation signal from at least one of:
a) the caller (10);
b) the electronic wallet (70); and/or
c) the agent (30).

3. The method of claim 1 or 2, wherein the notification comprises a plurality of tones and/or the method further comprises: a) requesting the sensitive information via a plurality of tones via the voice call and/or b) receiving the sensitive information as a plurality of tones via the voice call.

4. The method of any preceding claim, wherein the tones are at least one of:
a) inaudible;
b) comprise DTMF tones; and/or
c) are masked by or incorporated into an audio signal.

5. The method of any preceding claim, wherein the sensitive information is encoded in base 14 or base 12 and/or received via an alternative communication channel other than that being used for the voice call.

6. The method of any preceding claim, further comprising maintaining the voice call between the caller (10) and the agent (30) during the transaction.

7. The method of any preceding claim, further comprising monitoring for the presence of:
a) a voice call and transmitting a trigger to the electronic wallet (70) to prepare for potential use; and/or
b) other transaction methods and determining which transaction method is to be used, preferably in dependence on at least one of:
i) an order of precedence of transaction methods; and
ii) prioritising the transaction method already in progress.

8. The method of any preceding claim, further comprising determining the compatibility of the electronic wallet (70) with the method of any of claims 1 to 8, preferably via at least one of:
i) transmitting to the electronic wallet (70) a signal comprising an identifier identifying the transaction method or a query requesting identification of at least one transaction method with which the electronic wallet (70) is compatible; and
ii) receiving from the electronic wallet (70) a signal comprising an indicator indicating the compatibility of the electronic wallet (70) with the transaction method or an identifier of at least one transaction method with which the electronic wallet (70) is compatible.

9. A call processor (60) for facilitating a transaction during a voice call between a caller (10) and an agent (30), comprising:
means for activating a secure mode of the call processor (60) adapted to prevent sensitive information relating to a transaction provided by the caller (10) from being accessible by the agent (30);
means for transmitting a notification that the secure mode has been activated via a voice channel used for the voice call to an electronic wallet (70) accessible by the caller (10) in which the sensitive information is stored, the electronic wallet (70) being adapted not to transmit sensitive information unless the secure mode is determined to be active;
means for receiving an acknowledgement of receipt of said notification and subsequently sensitive information from the electronic wallet (70); and
means for processing the transaction in dependence on the sensitive information received from the electronic wallet (70).

10. The call processor (60) of claim 9, wherein the notification comprises a plurality of tones and/or the call processor further comprises means for: a) requesting and/or b) receiving the sensitive information as a plurality of tones via the voice call.

11. The call processor (60) claim 9 or 10, wherein the tones are at least one of:
a) inaudible;
b) comprise DTMF tones; and/or
c) masked by or incorporated into an audio signal.

12. The call processor (60) of any of claims 9 to 11, wherein the sensitive information is encoded in base 14 or base 12 and/or the means for receiving the sensitive information is adapted to receive the sensitive information via an alternative communication channel other than that being used for the voice call.

13. The call processor (60) of any of claims 9 to 12, wherein the call processor is adapted to maintain the voice call between the caller (10) and the agent (70) during the transaction.

14. The call processor (60) of any of claims 9 to 13, wherein the call processor further comprises means for determining the compatibility of the electronic wallet (70) with the call processor,
preferably adapted to do at least one of:
i) transmit to the electronic wallet (70) a signal comprising an identifier identifying the call processor or a query requesting identification of at least one call processor (60) with which the electronic wallet (70) is compatible; and
ii) receive from the electronic wallet (70) a signal comprising an indicator indicating the compatibility of the electronic wallet (70) with the call processor (60) or an identifier of at least one call processor (60) with which the electronic wallet (70) is compatible.

15. A computer program product for providing an electronic wallet (70) adapted to facilitate a transaction during a voice call between a caller (10) and an agent (30) via a call processor (60), comprising:
means for storing sensitive information relating to the transaction;
means for receiving a request for the sensitive information;
means for receiving a notification via a voice channel used for the voice call that a secure mode of the call processor (60) has been activated, the secure mode being adapted to prevent the sensitive information from reaching the agent (30); and
means for transmitting an acknowledgement of receipt of the notification and subsequently the sensitive information;
wherein the means for transmitting is adapted to transmit the sensitive information only if the notification that a secure mode has been activated has been received; and
wherein the electronic wallet (70) is adapted not to transmit sensitive information unless the secure mode is determined to be active.

## Patentansprüche

1. Verfahren zum Erleichtern einer Transaktion während eines Sprachanrufs zwischen einem Anrufer (10) und einem Agenten (30) über einen Rufprozessor (60), wobei das Verfahren Folgendes beinhaltet:
Aktivieren (S1) eines sicheren Modus des Rufprozessors (60), ausgelegt zum Verhindern, dass sensible Informationen in Bezug auf die vom Anrufer (10) bereitgestellte Transaktion für den Agenten (30) zugänglich werden;
Senden (S2) einer Benachrichtigung, dass der sichere Modus aktiviert wurde, über einen für den Sprachanruf benutzten Sprachkanal zu einer für den Anrufer (10) zugänglichen elektronischen Geldbörse (70), in der die sensiblen Informationen gespeichert sind, wobei die elektronische Geldbörse (70) so ausgelegt ist, dass sie sensible Informationen nur dann sendet, wenn festgestellt wird, dass der sichere Modus aktiv ist;
Empfangen (S9), von der elektronischen Geldbörse (70), einer Empfangsquittung für die Bestätigung und nachfolgend sensible Informationen; und
Verarbeiten der Transaktion in Abhängigkeit von den von der elektronischen Geldbörse (70) empfangenen sensiblen Informationen.

2. Verfahren nach Anspruch 1, das ferner das Aktivieren des sicheren Modus als Reaktion auf den Empfang eines Sicherer-Modus-Aktivierungssignals von wenigstens einem der Folgenden beinhaltet:
a) dem Anrufer (10);
b) der elektronischen Geldbörse (70); und/oder
c) dem Agenten (30).

3. Verfahren nach Anspruch 1 oder 2, wobei die Benachrichtigung mehrere Töne umfasst und/oder wobei das Verfahren ferner Folgendes beinhaltet: a) Anfordern der sensiblen Informationen über mehrere Töne über den Sprachanruf und/oder b) Empfangen der sensiblen Informationen als mehrere Töne über den Sprachanruf.

4. Verfahren nach einem vorherigen Anspruch, wobei die Töne wenigstens eines der Folgenden sind:
a) nicht hörbar;
b) DTMF-Töne umfassend; und/oder
c) von einem Audiosignal maskiert oder darin integriert.

5. Verfahren nach einem vorherigen Anspruch, wobei die sensiblen Informationen in Basis 14 oder Basis 12 codiert und/oder über einen alternativen Kommunikationskanal empfangen werden, der nicht der für den Sprachanruf benutzte ist.

6. Verfahren nach einem vorherigen Anspruch, das ferner das Führen des Sprachanrufs zwischen dem Anrufer (10) und dem Agenten (30) während der Transaktion beinhaltet.

7. Verfahren nach einem vorherigen Anspruch, das ferner das Überwachen auf Anwesenheit von Folgendem beinhaltet:
a) einem Sprachanruf und Senden eines Triggers zu der elektronischen Geldbörse (70) zum Vorbereiten auf einen potentiellen Gebrauch; und/oder
b) anderen Transaktionsmethoden und Feststellen, welche Transaktionsmethode verwendet werden soll, vorzugsweise in Abhängigkeit von wenigstens einem der Folgenden:
i) der Präzedenzordnung von Transaktionsmethoden; und
ii) Priorisierung der bereits laufenden Transaktionsmethode.

8. Verfahren nach einem vorherigen Anspruch, das ferner das Bestimmen der Kompatibilität der elektronischen Geldbörse (70) mit dem Verfahren nach einem der Ansprüche 1 bis 8 beinhaltet, vorzugsweise über wenigstens eines der Folgenden:
i) Senden eines Signals zu der elektronischen Geldbörse (70), das eine Kennung, die die Transaktionsmethode identifiziert, oder eine Anfrage umfasst, die die Identifikation von wenigstens einer Transaktionsmethode anfordert, mit der die elektronische Geldbörse (70) kompatibel ist; und
ii) Empfangen eines Signals von der elektronischen Geldbörse (70), das einen Indikator umfasst, der die Kompatibilität der elektronischen Geldbörse (70) mit der Transaktionsmethode anzeigt, oder eine Kennung von wenigstens einer Transaktionsmethode, mit der die elektronische Geldbörse (70) kompatibel ist.

9. Rufprozessor (60) zum Erleichtern einer Transaktion während eines Sprachanrufs zwischen einem Anrufer (10) und einem Agenten (30), der Folgendes umfasst:
Mittel zum Aktivieren eines sicheren Modus des Rufprozessors (60), ausgelegt zum Verhindern, dass sensible Informationen über eine vom Anrufer (10) bereitgestellte Transaktion für den Agenten (30) zugänglich werden;
Mittel zum Senden einer Benachrichtigung, dass der sichere Modus aktiviert wurde, über einen für den Sprachanruf benutzten Sprachkanal zu einer elektronischen Geldbörse (70), die für den Anrufer (10) zugänglich ist, in der die sensiblen Informationen gespeichert sind, wobei die elektronische Geldbörse (70) so ausgelegt ist, dass sie sensible Informationen nur dann sendet, wenn festgestellt wird, dass der sichere Modus aktiv ist;
Mittel zum Empfangen einer Empfangsquittung der genannten Bestätigung und nachfolgend von sensiblen Informationen von der elektronischen Geldbörse (70); und
Mittel zum Verarbeiten der Transaktion in Abhängigkeit von den von der elektronischen Geldbörse (70) empfangenen sensiblen Informationen.

10. Rufprozessor (60) nach Anspruch 9, wobei die Benachrichtigung mehrere Töne umfasst und/oder der Rufprozessor ferner Mittel umfasst zum: a) Anfordern und/oder b) Empfangen der sensiblen Informationen als mehrere Töne über den Sprachanruf.

11. Rufprozessor (60) nach Anspruch 9 oder 10, wobei die Töne wenigstens eines der Folgenden sind:
a) nicht hörbar;
b) DTMF-Töne umfassend; und/oder
c) durch ein Audiosignal maskiert oder darin integriert.

12. Rufprozessor (60) nach einem der Ansprüche 9 bis 11, wobei die sensiblen Informationen in Basis 14 oder Basis 12 codiert sind und/oder das Mittel zum Empfangen der sensiblen Informationen zum Empfangen der sensiblen Informationen über einen alternativen Kommunikationskanal ausgelegt ist, der nicht für den Sprachanruf benutzt wird.

13. Rufprozessor (60) nach einem der Ansprüche 9 bis 12, wobei der Rufprozessor so ausgelegt ist, dass er den Sprachanruf zwischen dem Anrufer (10) und dem Agenten (70) während der Transaktion führt.

14. Rufprozessor (60) nach einem der Ansprüche 9 bis 13, wobei der Rufprozessor ferner Mittel zum Bestimmen der Kompatibilität der elektronischen Geldbörse (70) mit dem Rufprozessor umfasst, vorzugsweise ausgelegt zum Durchführen von wenigstens einem der Folgenden:
i) Senden eines Signals zur elektronischen Geldbörse (70), das eine Kennung, die den Rufprozessor identifiziert, oder eine Anfrage umfasst, die die Identifikation von wenigstens einem Rufprozessor (60) anfordert, mit dem die elektronische Geldbörse (70) kompatibel ist; und
ii) Empfangen eines Signals von der elektronischen Geldbörse (70), das einen Indikator umfasst, der die Kompatibilität der elektronischen Geldbörse (70) mit dem Rufprozessor (60) anzeigt, oder eine Kennung von wenigstens einem Rufprozessor (60), mit dem die elektronischen Geldbörse (70) kompatibel ist.

15. Computerprogrammprodukt zum Bereitstellen einer elektronischen Geldbörse (70), ausgelegt zum Erleichtern einer Transaktion während eines Sprachanrufs zwischen einem Anrufer (10) und einem Agenten (30) über einen Rufprozessor (60), das Folgendes umfasst:
Mittel zum Speichern von sensiblen Informationen über die Transaktion;
Mittel zum Empfangen einer Anforderung für die sensiblen Informationen;
Mittel zum Empfangen einer Benachrichtigung über einen für den Sprachanruf benutzten Sprachkanal, dass ein sicherer Modus des Rufprozessors (60) aktiviert wurde, wobei der sichere Modus so ausgelegt ist, dass er verhindert, dass die sensiblen Informationen den Agenten (30) erreichen; und
Mittel zum Senden einer Empfangsquittung der Benachrichtigung und nachfolgend der sensiblen Informationen;
wobei das Sendemittel zum Senden der sensiblen Informationen nur dann ausgelegt ist, wenn die Benachrichtigung empfangen wurde, dass ein sicherer Modus aktiviert wurde; und
wobei die elektronische Geldbörse (70) so ausgelegt ist, dass sie sensible Informationen nur dann sendet, wenn festgestellt wird, dass der sichere Modus aktiv ist.

## Revendications

1. Procédé de facilitation d'une transaction pendant un appel vocal entre un appelant (10) et un agent (30) via un processeur d'appels (60), le procédé comprenant :
l'activation (S1) d'un mode sécurisé du processeur d'appels (60) conçu pour empêcher que des informations sensibles concernant la transaction fournies par l'appelant (10) soient accessibles à l'agent (30) ;
la transmission (S2) d'une notification que le mode sécurisé a été activé via un canal vocal utilisé pour l'appel vocal à un portefeuille électronique (70) accessible à l'appelant (10) dans lequel les informations sensibles sont stockées, le portefeuille électronique (70) étant conçu pour ne pas transmettre d'informations sensibles à moins qu'il ne soit déterminé que le mode sécurisé est actif ;
la réception (S9) à partir du portefeuille électronique (70) d'un accusé de réception de la notification et par la suite d'informations sensibles ; et
le traitement de la transaction en fonction des informations sensibles reçues du portefeuille électronique (70) .

2. Procédé selon la revendication 1, comprenant en outre l'activation du mode sécurisé en réponse à la réception d'un signal d'activation de mode sécurisé à partir d'au moins l'un parmi :
a) l'appelant (10) ;
b) le portefeuille électronique (70) ; et/ou
c) l'agent (30).

3. Procédé selon la revendication 1 ou 2, dans lequel la notification comprend une pluralité de tonalités et/ou le procédé comprend en outre : a) la demande des informations sensibles via une pluralité de tonalités via l'appel vocal et/ou b) la réception des informations sensibles comme une pluralité de tonalités via l'appel vocal.

4. Procédé selon l'une quelconque des revendications précédentes, dans lequel les tonalités sont au moins une option parmi :
a) inaudibles ;
b) comprennent des tonalités DTMF ; et/ou
c) sont masquées par ou incorporées dans un signal audio.

5. Procédé selon l'une quelconque des revendications précédentes, dans lequel les informations sensibles sont encodées en base 14 ou base 12 et/ou reçues via un autre canal de communication différent de celui utilisé pour l'appel vocal.

6. Procédé selon l'une quelconque des revendications précédentes, comprenant en outre le maintien de l'appel vocal entre l'appelant (10) et l'agent (30) pendant la transaction.

7. Procédé selon l'une quelconque des revendications précédentes, comprenant en outre la surveillance de la présence :
a) d'un appel vocal et la transmission d'un déclencheur au portefeuille électronique (70) en préparation d'une utilisation potentielle ; et/ou
b) d'autres procédés de transaction et le fait de déterminer quel procédé de transaction sera utilisé, préférablement en fonction d'au moins l'un parmi :
i) un ordre de priorité des procédés de transaction ; et
ii) le fait d'accorder la priorité au procédé de transaction déjà en cours.

8. Procédé selon l'une quelconque des revendications précédentes, comprenant en outre la détermination de la compatibilité du portefeuille électronique (70) avec le procédé selon l'une quelconque des revendications 1 à 8, préférablement via au moins l'une parmi :
i) la transmission au portefeuille électronique (70) d'un signal comprenant un identifiant qui identifie le procédé de transaction ou une requête demandant l'identification d'au moins un procédé de transaction avec lequel le portefeuille électronique (70) est compatible ; et
ii) la réception à partir du portefeuille électronique (70) d'un signal comprenant un indicateur qui indique la compatibilité du portefeuille électronique (70) avec le procédé de transaction ou un identifiant d'au moins un procédé de transaction avec lequel le portefeuille électronique (70) est compatible.

9. Processeur d'appels (60) destiné à faciliter une transaction pendant un appel vocal entre un appelant (10) et un agent (30), comprenant :
des moyens destinés à l'activation d'un mode sécurisé du processeur d'appels (60) conçus pour empêcher que des informations sensibles concernant une transaction fournies par l'appelant (10) soient accessibles à l'agent (30) ;
des moyens destinés à la transmission d'une notification que le mode sécurisé a été activé via un canal vocal utilisé pour l'appel vocal à un portefeuille électronique (70) accessible à l'appelant (10) dans lequel les informations sensibles sont stockées, le portefeuille électronique (70) étant conçu pour ne pas transmettre d'informations sensibles à moins qu'il ne soit déterminé que le mode sécurisé est actif ;
des moyens destinés à la réception d'un accusé de réception de ladite notification et par la suite d'informations sensibles à partir du portefeuille électronique (70) ; et
des moyens destinés au traitement de la transaction en fonction des informations sensibles reçues du portefeuille électronique (70).

10. Processeur d'appels (60) selon la revendication 9, dans lequel la notification comprend une pluralité de tonalités et/ou le processeur d'appels comprend en outre des moyens destinés à : a) la demande et/ou b) la réception des informations sensibles comme une pluralité de tonalités via l'appel vocal.

11. Processeur d'appels (60) selon la revendication 9 ou 10, dans lequel les tonalités sont au moins une option parmi :
a) inaudibles ;
b) comprennent des tonalités DTMF ; et/ou
c) masquées par ou incorporées dans un signal audio.

12. Processeur d'appels (60) selon l'une quelconque des revendications 9 à 11, dans lequel les informations sensibles sont encodées en base 14 ou en base 12 et/ou les moyens destinés à la réception des informations sensibles sont conçus pour recevoir les informations sensibles via un autre canal de communication différent de celui utilisé pour l'appel vocal.

13. Processeur d'appels (60) selon l'une quelconque des revendications 9 à 12, dans lequel le processeur d'appels est conçu pour maintenir l'appel vocal entre l'appelant (10) et l'agent (70) pendant la transaction.

14. Processeur d'appels (60) selon l'une quelconque des revendications 9 à 13, dans lequel le processeur d'appels comprend en outre des moyens destinés à la détermination de la compatibilité du portefeuille électronique (70) avec le processeur d'appels, préférablement conçu pour faire au moins une action parmi :
i) la transmission au portefeuille électronique (70) d'un signal comprenant un identifiant qui identifie le processeur d'appels ou une requête demandant l'identification d'au moins un processeur d'appels (60) avec lequel le portefeuille électronique (70) est compatible ; et
ii) la réception à partir du portefeuille électronique (70) d'un signal comprenant un indicateur qui indique la compatibilité du portefeuille électronique (70) avec le processeur d'appels (60) ou un identifiant d'au moins un processeur d'appels (60) avec lequel le portefeuille électronique (70) est compatible.

15. Produit de programme d'ordinateur destiné à fournir un portefeuille électronique (70) conçu pour faciliter une transaction pendant un appel vocal entre un appelant (10) et un agent (30) via un processeur d'appels (60), comprenant :
des moyens destinés au stockage d'informations sensibles concernant la transaction ;
des moyens destinés à la réception d'une demande concernant les informations sensibles ;
des moyens destinés à la réception d'une notification via un canal vocal utilisé pour l'appel vocal qu'un mode sécurisé du processeur d'appels (60) a été activé, le mode sécurisé étant conçu pour empêcher que les informations sensibles atteignent l'agent (30) ; et
des moyens destinés à la transmission d'un accusé de réception de la notification et par la suite des informations sensibles ;
dans lequel les moyens destinés à la transmission sont conçus pour transmettre les informations sensibles uniquement si la notification qu'un mode sécurisé a été activé a été reçue ; et
dans lequel le portefeuille électronique (70) est conçu pour ne pas transmettre d'informations sensibles à moins qu'il ne soit déterminé que le mode sécurisé est actif.
